# EUROPÄISCHE PATENTSCHRIFT

(11) **EP 1 039 825 B1**
(45) Veröffentlichungstag und Bekanntmachung des Hinweises auf die Patenterteilung: **19.09.2001**
(21) Anmeldenummer: 98962322.8
(22) Anmeldetag: 05.11.1998
(51) Int. Cl.: A47J 43/07

(54) **GETRIEBEEINRICHTUNG**
GEAR SYSTEM
SYSTEME DE TRANSMISSION

(30) Priorität: 19.12.1997 DE 19756923
(43) Veröffentlichungstag der Anmeldung: 04.10.2000
(73) Patentinhaber: Braun GmbH, 61476 Kronberg (DE)
(72) Erfinder: SAFONT, Vicenc, E-08030 Montgat (ES); MASIP, Josep-Maria, E-08190 Sant Cugat del Vallés (ES); AGELL, Josep, E-08950 Esplugues de Llobregat (ES); REBORDOSA, Antonio, E-08272 Sant Fruitos de Bages (ES); PENARANDA, Mariano, E-08005 Barcelona (ES)
(86) Internationale Anmeldenummer: EP9807053
(87) Internationale Veröffentlichungsnummer: WO9932024

(56) Entgegenhaltungen:
- EP-A- 0 022 465
- DE-A- 3 045 088
- DE-A- 3 307 023
- US-A- 3 109 949

## Beschreibung

Die vorliegende Erfindung betrifft eine Getriebeeinrichtung für den häuslichen Bedarf, insbesondere für Küchengeräte, mit einer antriebsseitigen Eingangswelle und einer abtriebsseitigen Ausgangswelle, die mit einem Arbeitsteil in Drehverbindung steht, wobei zwischen Eingangs- und Ausgangswelle ein Planetenradgetriebe ausgebildet ist, das aus mindestens einem Planetenrad, einem mit diesem in Zahneingriff stehenden Sonnenrad und einem mit dem Planetenrad in Zahneingriff stehenden Hohlrad besteht, wobei das Planetenrad einerseits mit der Eingangswelle in Zahneingriff und andererseits über seine Achslagerung mit der Ausgangswelle in Dreheingriff steht (vgl EP-A-22465).

Planetenradgetriebe, auch als Planetengetriebe bezeichnet, sind allgemein bekannt und beispielsweise in "Meyers Großes Taschenlexikon", Band 17, 1983, Bibliographisches Institut, Mannheim/Zürich, oder in "Meyers Lexikon der Technik und der exakten Naturwissenschaften", 3. Band, Bibliographisches Institut, Mannheim/Zürich, beschrieben.

Planetenradgetriebe sind dadurch charakterisiert, daß mindestens ein Rad, das als Planetenrad bezeichnet wird, außer um seine eigene Achse auch noch mit dieser Achse um ein anderes Rad, das als Sonnenrad bezeichnet wird, dreht, und darüber hinaus das Planetenrad mit diesem Sonnenrad und einem äußeren Hohlrad in Eingriff steht. Werden zwei dieser drei Bestandteile, d.h. Planetenrad, Sonnenrad und Hohlrad, festgehalten, führt das dritte Teil eine zwangsläufige Bewegung aus. Üblicherweise werden drei Planetenrader, die um das Sonnenrad umlaufen, eingesetzt, die in einem gemeinsamen Planetenradträger gehalten sind. Durch geeignete Wahl der Größe der einzelnen Räder können zwischen der Antriebswelle und der Abtriebswelle, beispielsweise der Welle des Sonnenrads und der Welle des Planetenradträgers, geeignete Übersetzungs- oder Untersetzungsverhältnisse erhalten werden.

Ein Planetenradgetriebe wurde bereits in einem Arbeitswerkzeug zum Zubereiten von Nahrungsmitteln eingesetzt, wie dies in der EP-B1 0 292 664 offenbart ist. Bei dem aus dieser EP-B1 0 292 664 bekannten Arbeitswerkzeug handelt es sich um ein solches zum Mischen und Kneten von Nahrungsmitteln. Das Arbeitswerkzeug umfaßt eine Arbeitswelle, die von einem Elektromotor einer Küchenmaschine antreibbar ist. Das eigentliche Gehäuse des Arbeitswerkzeugs ist so geformt, daß es gleichzeitig das Misch- bzw. Knetwerkzeug bildet. Das Gehäuse wird im Bereich seines oberen Endes über ein Planetenradgetriebe angetrieben und liegt an seinem unteren Bereich an einem Lagerbock gleitend an. Das obere Ende des Arbeitswerkzeugs ist in einem Aufnahmebehälter der Küchenmaschine drehbar gehalten. Beim Antrieb wird über das Planetenradgetriebe das Gehäuse, das gleichzeitig das Arbeitswerkzeug bildet, für eine Misch- und Knetbewegung rotiert.

Aufgabe der Erfindung ist es nun, eine Getriebeeinrichtung für den häuslichen Bedarf, insbesondere für Küchengeräte, zu schaffen, mit der eine einfache Änderung der Übersetzungs- bzw. Untersetzungsverhältnisse, in zumindest zwei Stufen, ermöglicht wird, um die Antriebsbedingungen eines Geräts, in dem die Getriebeeinrichtung eingesetzt wird, den gewünschten Arbeitsbedingungen anpassen zu können, wobei eine Änderung zwischen den zwei unterschiedlichen Antriebsbedingungen auf einfache Weise ermöglicht werden soll.

Diese Aufgabe wird erfindungsgemäß, ausgehend von einer Getriebeeinrichtung mit den eingangs angegebenen Merkmalen, dadurch gelöst, daß das Planetenrad und das Hohlrad mehrere Zahnradpaare unterschiedlicher Durchmesser aufweisen und daß das Hohlrad in Achsrichtung derart verschiebbar ist, daß in der einen Betriebsstellung die Zahnradpaare größeren Durchmessers und in der anderen Betriebsstellung die Zahnradpaare kleineren Durchmessers in Zahneingriff gelangen. Dadurch, daß das mindestens eine Planetenrad und das Hohlrad mindestens je zwei Zahnkränze unterschiedlicher Durchmesser aufweisen und das Hohlrad in Achsrichtung verschiebbar ist und dadurch in einer Betriebsstellung die Zahnkränze des größeren Durchmessers in Eingriff gebracht werden können, während in der anderen oder einer weiteren Stellung die Zahnkränze der anderen, kleineren Durchmesser in Eingriff gebracht werden können, können zumindest zwei oder mehrere unterschiedliche Übersetzungsverhältnisse eingerichtet werden. Entsprechend der Anzahl der miteinander wirkenden Zahnradpaare ergibt sich die Anzahl der Getriebestufen. Bei jeder gerade eingesetzten Getriebestufe müssen allerdings die anderen Zahnradpaare nicht in Zahneingriff sein. Bevorzugt sind zwei Zahnradpaare, also zwei wechselbare Getriebestufen.

Durch die verschiebbare Anordnung des Hohlrads, das den äußeren Körper der Getriebeeinrichtung bildet, ist es auf einfache Weise möglich, von der Außenseite eines Gehäuses aus die Verschiebung vorzunehmen, um die Antriebsbedingungen zu verändern, so daß sich eine stabile und betriebssichere Anordnung ergibt. Die Zahnräder dagegen, d.h. das Planetenrad oder die Planetenräder und das Sonnenrad, können in fester Zuordnung zueinander angeordnet werden.

In einer bevorzugten Ausbildung der Getriebeeinrichtung gemäß Anspruch 2 wird das axial verschiebbare Hohlrad im Betrieb drehfest dem Gehäuse des Geräts zugeordnet, d.h. es wird so im Gehäuse befestigt, daß es nur axial zwischen den zwei unterschiedlichen Eingriffstellungen verschiebbar ist. Wird hierbei das Sonnenrad angetrieben, das unmittelbar auf einer Antriebswelle aufgesetzt werden kann, dreht sich das Planetenrad zwischen dem Sonnenrad und dem Hohlrad durch entsprechenden Zahneingriff mit diesen und treibt über seine Achslagerung eine damit in Verbindung stehende Ausgangswelle, die als Hohlwelle ausgebildet sein kann, an.

Für eine gleichmäßige Kraftübertragung zwischen Sonnenrad und Hohlrad ist es gemäß Anspruch 3 bevorzugt, daß drei Planetenräder vorgesehen werden. Solche Planetenräder werden gleichmäßig in dem Zwischenraum zwischen Sonnenrad und Hohlrad, d.h. mit den Achsen ihrer Achslagerung um 120° zueinander versetzt, angeordnet.

Um bei zwei Zahnradpaaren neben den zwei unterschiedlichen Übersetzungs- oder Untersetzungsverhältnissen durch die jeweiligen zwei Zahnkränze des Planetenrads bzw. der Planetenräder und des Hohlrads einen weiteren Antrieb mit einer unterschiedlichen Umdrehungszahl bei unveränderter Umdrehungszahl der Eingangswelle zur Verfügung zu stellen, wird gemäß Anspruch 4 die Eingangswelle so durch die Getriebeeinrichtung hindurchgeführt, daß sie auf der gegenüberliegenden Seite mit einem Arbeitswerkzeug verbindbar ist.

Um sowohl an die erste Ausgangswelle als auch an die zweite Ausgangswelle mit einfachen Verbindungsmitteln ankoppeln zu können, hat es sich gemäß Anspruch 5 als bevorzugt erwiesen, die erste Ausgangswelle hülsenförmig in Form einer außen- oder innenverzahnten Hülse auszubilden, die die zweite Ausgangswelle, die durch den verlängerten Abschnitt der Eingangswelle gebildet wird, konzentrisch umgibt. Vorzugsweise wird hierbei die zweite Ausgangswelle mit einer axial verlaufenden Verzahnung versehen, so daß auf diese Verzahnung ein entsprechendes Arbeitsteil aufgesteckt werden kann, während die erste Ausgangswelle auf ihrer radial außenliegenden Seite eine Längsverzahnung aufweist, um darauf, ohne mit der Verzahnung der zweiten Ausgangswelle in Wechselwirkung zu treten, ein Antriebsteil aufzustecken.

Um eine exakte Verschiebung des Hohlrads zu gewährleisten, sollte gemäß Anspruch 6 eine Verschiebeanordnung eingesetzt werden, die einen Nocken aufweist, der dann in einer entsprechenden Nockenfläche eines Gehäuses eingreift. Unter axialer Verschiebung der Verschiebeanordnung verschiebt sich der Nocken entlang der Nockenfläche derart, daß dadurch das Hohlrad axial in Richtung seiner Mittelachse in den beiden Betriebsstellungen verschiebbar ist, um mit den größeren oder kleineren Zahnkränzen des Planetenrads und des Hohlrads in Eingriff zu treten.

Eine einfache Führung des Hohlrads, um dieses axial zu verschieben, wird durch eine Nut- und Federanordnung erzielt (Anspruch 7). Dabei verlaufen diese bevorzugt parallel zu der Achsrichtung der Planetenräder (Anspruch 8).

Um die Verschiebung des Hohlrads mit einer guten Handhabbarkeit vorzunehmen, wird eine Verschiebeanordnung mit einem Handhabungsteil aufgebaut, wobei dieses Handhabungsteil den Nocken oder die Nockenfläche umfaßt und wobei das Handhabungsteil gegenüber dem Hohlrad drehbar geführt ist (Anspruch 9). Hierbei sollte in einer weiteren Ausgestaltung das Handhabungsteil den mindestens einen Nocken aufweisen. Dieser Nocken kann dann in einer entsprechenden Nut als Nockenführungsfläche eines Gehäuses und/oder einer entsprechenden Nut und Nockenfläche des Hohlrads unter Drehung des Handhabungsteils geführt werden, so daß sich der Nocken in Achsrichtung der Räder verschiebt und somit das Hohlrad in Achsrichtung mit sich führt, um es zwischen seinen unterschiedlichen Antriebsstellungen zu verschieben.

Um sicherzustellen, daß während eines Gebrauchs eines Arbeitsgeräts die jeweils eingestellte Stellung des Hohlrads und damit die gewählte Antriebsübersetzung oder -untersetzung beibehalten wird, sollte, gemäß Anspruch 11, das Handhabungsteil in den jeweiligen Eingriffsstellungen des Hohlrads verriegelbar sein, beispielsweise indem der Nokken in den jeweiligen Endstellungen in eine Vertiefung einrastet.

Weitere Einzelheiten und Merkmale der Erfindung ergeben sich aus der nachfolgenden Beschreibung eines Ausführungsbeispiels anhand der Zeichnung. In der Zeichnung zeigt
- Fig. 1: eine perspektivische Ansicht einer dreistufigen Getriebeeinrichtung mit Gehäuse, wobei das Gehäuse einen Deckel eines Zerkleinerungs- oder Mischtopfes darstellt, in dem ein Arbeitswerkzeug rotiert,
- Fig. 2: eine entlang der Mittenachse teilweise geschnittene Getriebeeinrichtung mit einer ersten Position der Zahnräder,
- Fig. 3: eine der Figur 2 entsprechende Darstellung mit einer zweiten Position, und
- Fig. 4: eine Teilschnittansicht, die ein Beispiel der Funktionsweise einer Verschiebeeinrichtung zur Änderung der Getriebeeinrichtung in die erste und die zweite Position eines Untersetzungsverhältnisses zeigt.

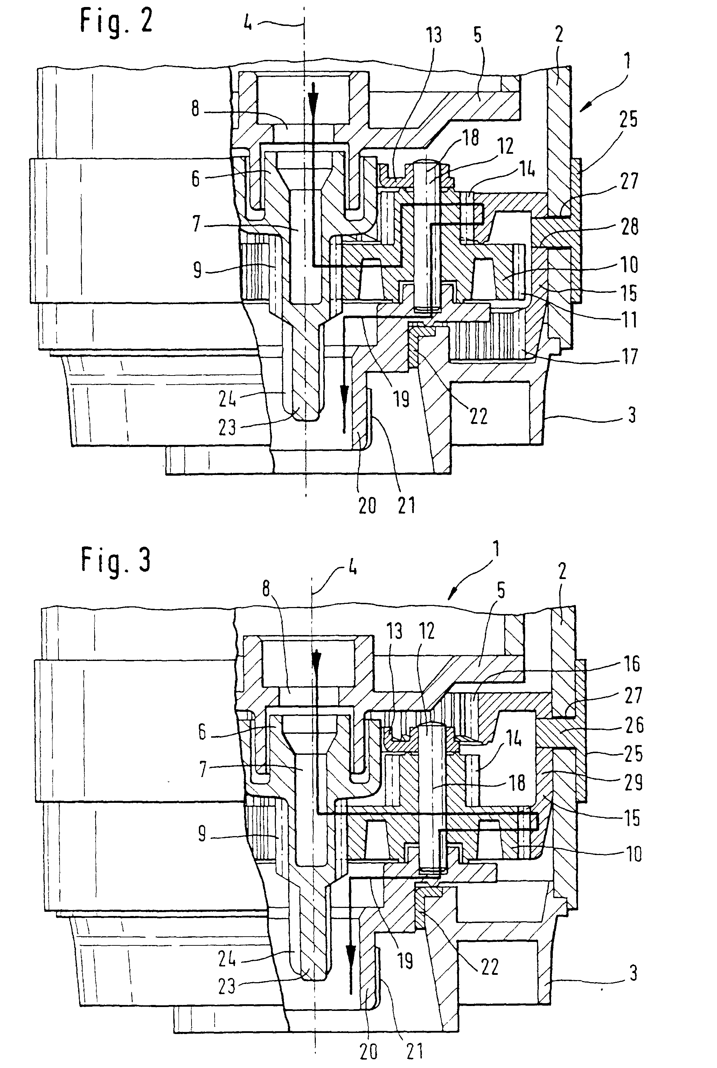

Wie die Figuren 2 und 3 zeigen, umfaßt die Getriebeeinrichtung ein Gehäuse 1 mit einem oberen Gehäuseteil 2 und einem unteren Gehäuseteil 3, die koaxial zu einer Mittenachse 4 angeordnet sind. Auf der Oberseite ist innerhalb des oberen, hülsenförmigen Gehäuseteils 2 ein Gehäusemittelteil 5 eingesetzt, das das obere Gehäuseteil 2 verschließt. Dieses Gehäusemittelteil 5 stützt sich auf einem zentralen Antriebsteil 6 ab, das zentral entlang der Mittenachse 4 angeordnet ist.

Das zentrale Antriebsteil 6 besitzt eine Sacklochbohrung 7, die über eine zentrale Öffnung 8 in dem Gehäusemittelteil 5 zugänglich ist. In diese Sacklochbohrung 7 kann eine nicht näher dargestellte Antriebswelle einer Motoreinheit eingesteckt und gekoppelt werden, um das zentrale Antriebsteil 6 zu drehen.

Das zentrale Antriebsteil 6 bildet die Eingangswelle der Getriebeeinheit und ist in der Mitte mit einem Sonnenrad 9 versehen. In dieses Sonnenrad 9 greifen drei Planetenräder 10 mit ihrem jeweiligen unteren, großen Zahnkranz 11 ein. Die drei Planetenräder 10 sind gleichmäßig um den Umfang des Sonnenrads 9 herum verteilt, d.h. unter einer Beabstandung von 120°. Die drei Planetenräder 10 besitzen jeweils eine Achswelle 12, die in einer gemeinsamen Achslagerplatte 13 gelagert sind. Diese Achslagerplatte 13 besitzt eine zentrale Öffnung, deren Rand sich an das zentrale Antriebsteil 6 zentrierend anlegt.

Jedes Planetenrad 10 besitzt einen großen Zahnkranz 11, der, wie vorstehend erwähnt ist, mit dem Sonnenrad 9 in Eingriff steht, und einen oberen, kleinen Zahnkranz 14.

Die Planetenräder 10 werden radial außen von einem Hohlrad 15 umgeben, das seinerseits einen oberen Zahnkranz 16 mit kleinem Durchmesser und einen unteren Zahnkranz 17 mit großem Durchmesser umfaßt, wobei der obere Zahnkranz 16 mit kleinem Durchmesser den oberen, kleinen Zahnkränzen 14 der Planetenräder 10 zugeordnet ist, während der untere Zahnkranz 17 mit großem Durchmesser den unteren, großen Zahnkränzen 11 der Planetenräder 10 zugeordnet ist.

Das Hohlrad 15 ist in Richtung der Achse 4 bzw. der Drehachse 18 der Planetenräder 10 verschiebbar zwischen einer unteren Stellung, wie sie in Figur 2 dargestellt ist, und einer oberen Stellung, wie sie in Figur 3 dargestellt ist. In der unteren Stellung greift der obere Zahnkranz 16 mit kleinem Durchmesser des Hohlrads 15 in den kleinen Zahnkranz 14 der Planetenräder ein, so daß ein Kraftfluß bzw. eine Antriebsverbindung entsteht, wie sie durch die durchgezogene Linie 19 in Figur 2 dargestellt ist.

Falls erwünscht ist, das Untersetzungsverhältnis, das mit der Getriebestellung, wie sie in Figur 2 gezeigt ist, erhalten wird, zu ändern, wird das Hohlrad 15 in Richtung der Achse 4 nach oben verschoben, so daß der obere Zahnkranz 16 des Hohlrads 15 außerhalb des Eingriffs mit dem oberen, kleinen Zahnkranz 14 gelangt, während der untere Zahnkranz 17 des Hohlrads 15 mit dem unteren, großen Zahnkranz 11 der Planetenräder 10 in Eingriff tritt. Hierdurch ergibt sich ein veränderter Kraftfluß bzw. eine Antriebsverbindung, wie wiederum durch die durchgezogene Linie 19 in Figur 3 gezeigt ist.

In den jeweiligen Stellungen des Hohlrads 15 entsprechend der Figuren 2 und 3 wird jeweils auf der Abtriebsseite die Drehbewegung von einer Zahnhülse 20, die eine Außenverzahnung 21 aufweist, abgegriffen bzw. mit dieser Außenverzahnung 21 der Zahnhülse 20 kann ein entsprechendes Arbeitswerkzeug, das nicht dargestellt ist, verbunden werden. Die Zahnhülse 20 wird, wie anhand der Figuren 2 und 3 zu erkennen ist, durch die Achswellen 12, auf denen die Planetenräder 10 gelagert sind, die sich zwischen Sonnenrad 9 und Hohlrad 15 drehen, jeweils mitgedreht und um die Achse 4 gedreht. Hierzu ist die Zahnhülse 20 in ihrem oberen Bereich durch Gleitteile 22, die dem unteren Gehäuseteil 3 zugeordnet sind, gelagert.

Falls ein Arbeitswerkzeug mit einer hohen Drehzahl angetrieben werden soll, kann die Drehzahl des zentralen Antriebsteils 6, mit dem eine Eingangswelle eines Antriebsmotors gekoppelt wird, an der Unterseite der Getriebeeinrichtung über eine zweite Ausgangswelle 23 unmittelbar abgegriffen werden, die ihrerseits mit einer Außenverzahnung 24 versehen ist. Hierzu wird ein entsprechendes Verbindungsteil auf die Verzahnung 24 der zweiten Ausgangswelle 23 aufgesteckt, das sich darüber hinaus an die Innenseite der Zahnhülse 20 anlegen kann.

Mit der Getriebeeinrichtung, wie sie in den Figuren 2 und 3 dargestellt ist, können somit zwei unterschiedliche Umdrehungszahlen auf der Ausgangsseite abgegriffen werden, nämlich zum einen über die zweite Ausgangswelle 23 und zum anderen über die erste Ausgangswelle, die durch die Zahnhülse 20 gebildet ist, in den jeweils unterschiedlichen Stellungen des Hohlrads 15.

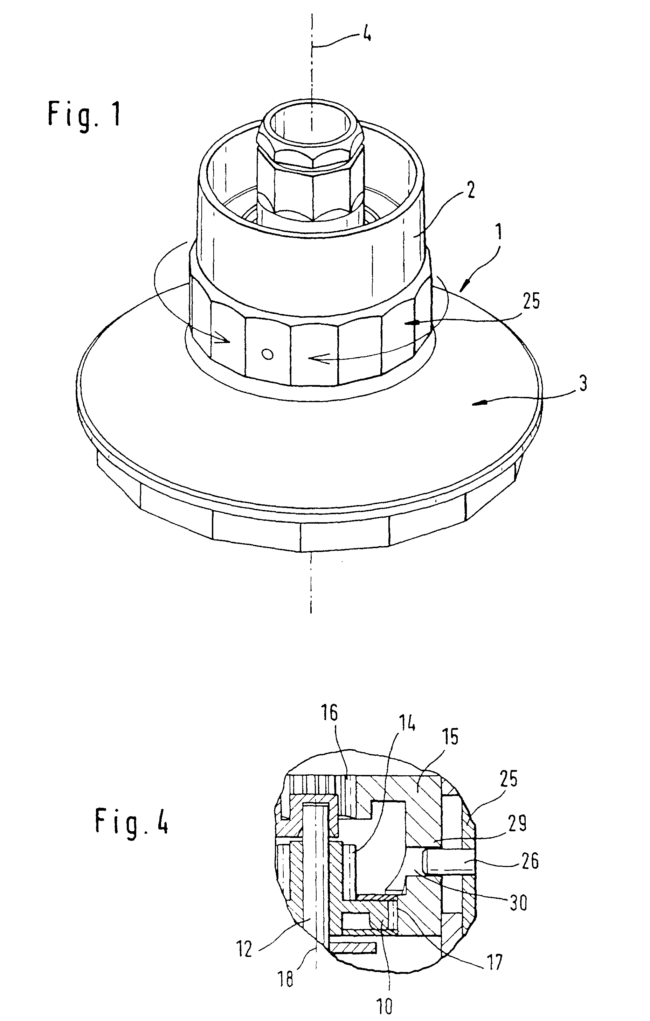

Um das Hohlrad 15 entsprechend seiner unteren Stellung gemäß Figur 2 und seiner oberen Stellung gemäß Figur 3 zu verschieben, ist eine Verschiebeanordnung mit einem ringförmigen Handhabungsteil 25, wie es auch in Figur 1 zu sehen ist, das sich an die Außenseite des oberen Gehäuseteils 2 anlegt, vorgesehen. Dieses Handhabungsteil 25 besitzt mindestens einen Nocken 26, der in eine entsprechende Nut 27 des oberen Gehäuseteils 2 sowie eine entsprechende Öffnung 28 des Rohrabschnitts 29 des Hohlrads 15, der den oberen und den unteren Zahnkranz 16, 17 mit Abstand zueinander verbindet, eingreift. Die Nut 27 verläuft in Umfangsrichtung des Hohlrads 15 und des oberen Gehäuseteils 2 mit einer definierten Steigung derart, daß bei einem Verdrehen des Handhabungsteils 25 in Umfangsrichtung der Nocken 26 in der Nut 27 verschoben wird und dadurch der Nocken 26 das Hohlrad 15 in Richtung der Achse 4 verschiebt.

Die Anordnung eines solchen Handhabungsteils 25 ist in Figur 1 in Form eines Deckels perspektivisch dargestellt, wobei die Figur 1 in ihrem äußeren Gehäuseaufbau mit der Anordnung der Figuren 2 und 3 identisch ist; dabei sind für vergleichbare Bauteile Bezugsziffern eingesetzt, wie sie auch in den Figuren 2 und 3 verwendet sind. Der Deckel 25 kann auf einen Behälter aufgesetzt und mit ihm über die Getriebeeinrichtung ein Arbeitswerkzeug von verschiedenen Drehzahlen angetrieben werden, so wie dies aus der älteren deutschen Patentanmeldung 197 03 871.9 bekannt ist. Der Einfachheit halber wird deshalb nicht mehr näher hierauf eingegangen.

Eine abgewandelte Ausführungsform des Handhabungsteils 25 bzw. der Nocken- und Nokkenflächenanordnung ist in Figur 4 dargestellt. Während in der Ausführungsform der Figuren 2 und 3 der Nocken 26 in der Nut 27 des Gehäuses 2 geführt wird und in dem Rohrabschnitt 29 des Hohlrads 15 fest verankert ist, ist in der Detaildarstellung der Figur 4 der Nocken 26 in dem Gehäuse 2 frei geführt, während die Nockenfläche durch eine Nut 30 in dem Hohlrad 15 gebildet ist.

## Patentansprüche

1. Getriebeeinrichtung für den häuslichen Bedarf, insbesondere für Küchengeräte, mit einer antriebsseitigen Eingangswelle (6) und einer abtriebsseitigen Ausgangswelle (20), die mit einem Arbeitsteil in Drehverbindung steht, wobei zwischen Eingangs- (6) und Ausgangswelle (20) ein Planetenradgetriebe ausgebildet ist, das aus mindestens einem Planetenrad (10), einem mit diesem in Zahneingriff stehenden Sonnenrad (9) und einem mit dem Planetenrad (10) in Zahneingriff stehenden Hohlrad (15) besteht, wobei das Planetenrad (10) einerseits mit der Eingangswelle (6) in Zahneingriff und andererseits über seine Achslagerung (12) mit der Ausgangswelle (20) in Dreheingriff steht,
**dadurch gekennzeichnet,**
**daß** das Planetenrad (10) mit dem Hohlrad (15) mindestens zwei Zahnradpaare (11, 14; 16, 17) unterschiedlicher Durchmesser aufweist und daß das Hohlrad (15) in Achsrichtung (4) derart verschiebbar ist, daß immer nur ein Zahnradpaar (11, 14 oder 16, 17) in Zahneingriff gelangt.

2. Getriebeeinrichtung nach Anspruch 1,
**dadurch gekennzeichnet,**
**daß** das Hohlrad (15) im Betrieb drehfest im Gehäuse (1) des Geräts befestigt ist.

3. Getriebeeinrichtung nach Anspruch 1 oder 2,
**dadurch gekennzeichnet,**
**daß** drei gleichmäßig über den Umfang verteilte Planetenräder (10) sowohl mit der Verzahnung (16, 17) des Hohlrads (15) als auch mit der Verzahnung (9) der Eingangswelle (6) in Eingriff stehen.

4. Getriebeeinrichtung nach Anspruch 1 oder 2,
**dadurch gekennzeichnet,**
**daß** die Eingangswelle (6) das Planetenradgetriebe durchdringt und auf der anderen Seite mit einem Abgriff als zweite Ausgangswelle (23) versehen ist.

5. Getriebeeinrichtung nach Anspruch 2,
**dadurch gekennzeichnet,**
**daß** die erste Ausgangswelle von einer Zahnhülse (20) gebildet wird, die die zweite Ausgangswelle (23) konzentrisch umgibt.

6. Getriebeeinrichtung nach Anspruch 5,
**dadurch gekennzeichnet,**
**daß** das Hohlrad (15) über eine Verschiebeanordnung (25, 26,27; 30), die mindestens einen in eine Nockenfläche eines Gehäuses (1) eingreifenden Nocken (26) aufweist, axial verschiebbar ist.

7. Getriebeeinrichtung nach Anspruch 1,
**dadurch gekennzeichnet,**
**daß** das Hohlrad (15) über eine Nut- und Federanordnung axial verschiebbar geführt ist.

8. Getriebeeinrichtung nach Anspruch 7,
**dadurch gekennzeichnet,**
**daß** sich die Nuten und Federn parallel zur Achsrichtung (18) der Planetenräder (10) erstrecken.

9. Getriebeeinrichtung nach Anspruch 6,
**dadurch gekennzeichnet,**
**daß** die Verschiebeanordnung ein Handhabungsteil (25) aufweist, das den Nocken (26) oder die Nockenfläche umfaßt, wobei das Handhabungsteil (25) gegenüber dem Hohlrad (15) drehbar geführt ist.

10. Getriebeeinrichtung nach Anspruch 9,
**dadurch gekennzeichnet,**
**daß** dem Handhabungsteil (25) der mindestens eine Nocken (26) zugeordnet ist.

11. Getriebeeinrichtung nach Anspruch 9,
**dadurch gekennzeichnet,**
**daß** das Handhabungsteil (25) in den jeweiligen Eingriffsstellungen des Hohlrads verriegelbar ist.

## Claims

1. A gear arrangement for domestic use, particularly for kitchen appliances, having an input shaft (6) at the driving end and an output shaft (20) rotatably connected to a working part at the driven end, there being arranged between the input shaft (6) and the output shaft (20) a planet gear train comprising at least one planet gear (10), a sun gear (9) meshing with said planet gear and a ring gear (15) meshing with said planet gear (10), said planet gear (10) being in meshing engagement with the input shaft (6) on the one side and in rotary engagement by way of its axle bearing (12) with the output shaft (20) on the other side,
**characterized in that** the planet gear (10) and the ring gear (15) have at least two gear pairs (11, 14; 16, 17) of various diameter, and that the ring gear (15) is displaceable in an axial direction (4) so that only one gear pair (11, 14 or 16, 17) is in meshing engagement at a time.

2. The gear arrangement as claimed in claim 1,
**characterized in that** in operation the ring gear (15) is non-rotatably fastened in the housing (1) of the appliance.

3. The gear arrangement as claimed in claim 1 or 2,
**characterized in that** three planet gears (10) arranged uniformly over the circumference are in meshing engagement with both the teeth (16, 17) of the ring gear (15) and the teeth (9) of the input shaft (6).

4. The gear arrangement as claimed in claim 1 or 2,
**characterized in that** the input shaft (6) is passed through the planet gear train and has at its other end a pick-off serving as a second output shaft (23).

5. The gear arrangement as claimed in claim 2,
**characterized in that** the first output shaft is formed by a toothed sleeve (20) which concentrically encompasses the second output shaft (23).

6. The gear arrangement as claimed in claim 5,
**characterized in that** the ring gear (15) is axially displaceable by a displacement device (25, 26, 27; 30) having at least one cam (26) that engages in a cam track of a housing (1).

7. The gear arrangement as claimed in claim 1,
**characterized in that** the ring gear (15) is axially displaceably guided by a tongue and groove arrangement.

8. The gear arrangement as claimed in claim 7,
**characterized in that** said tongue and groove arrangement extends parallel to the axial direction (18) of the planet gears (10).

9. The gear arrangement as claimed in claim 6,
**characterized in that** the displacement device includes a manipulating element (25) comprising the cam (26) or the cam track, said manipulating element (25) being rotatably guided relative to the ring gear (15).

10. The gear arrangement as claimed in claim 9,
**characterized in that** the at least one cam (26) is incorporated in the manipulating element (25).

11. The gear arrangement as claimed in claim 9,
**characterized in that** the manipulating element (25) is adapted to be locked in the respective engagement positions of the ring gear.

## Revendications

1. Système de transmission pour les applications ménagères, en particulier pour des robots de cuisine, comportant un arbre d'entrée (6) côté entraînement et un arbre de sortie (20) côté sortie, qui est en liaison de rotation avec une pièce de travail, dans lequel entre l'arbre d'entrée (6) et l'arbre de sortie (20) est réalisé une transmission à planétaires qui est constituée par au moins une roue planétaire (10), une roue solaire (9) en engrènement avec celle-ci et une roue à denture intérieure (15) en engrènement avec la roue planétaire (10), la roue planétaire (10) étant d'une part en engrènement avec l'arbre d'entrée (6) et d'autre part en engagement solidaire en rotation avec l'arbre de sortie (20), par l'intermédiaire de son palier (12), **caractérisé en ce que** la roue planétaire (10) et la roue à denture intérieure (15) présentent au moins deux paires de roues dentées (11, 14 ; 16, 17) de diamètres différents et en ce que la roue à denture intérieure (15) est susceptible d'être déplacée en direction axiale (4) de telle sorte qu'il n'y a jamais qu'une seule paire de roues dentées (11, 14 ou 16, 17) qui vienne en engrènement.

2. Système de transmission selon la revendication 1, **caractérisé en ce que** la roue à denture intérieure (15) en fonctionnement est fixée de manière solidaire en rotation dans le boîtier (1) de l'appareil.

3. Système de transmission selon l'une ou l'autre des revendications 1 et 2, **caractérisé en ce que** trois roues planétaires (10) réparties de manière régulière sur la périphérie sont en engrènement non seulement avec la denture (16, 17) de la roue à denture intérieure (15) mais aussi avec la denture (9) de l'arbre d'entrée (6).

4. Système de transmission selon l'une ou l'autre des revendications 1 et 2, **caractérisé en ce que** l'arbre d'entrée (6) traverse l'engrenage de la roue planétaire et est pourvu, de l'autre côté, d'un moyen de prélèvement en tant que deuxième arbre de sortie (23).

5. Système de transmission selon la revendication 2, **caractérisé en ce que** le premier arbre de sortie est formé par une douille dentée (20) qui entoure de manière concentrique le deuxième arbre de sortie (23).

6. Système de transmission selon la revendication 5, **caractérisé en ce que** la roue à denture intérieure (15) est susceptible d'être déplacée axialement par l'intermédiaire d'un agencement de déplacement (25, 26, 27 ; 30) qui présente au moins une came (26) s'engageant dans une surface à cames d'un boîtier (1).

7. Système de transmission selon la revendication 1, **caractérisé en ce que** la roue à denture intérieure (15) est guidée à déplacement axial par l'intermédiaire d'un agencement à languette-et-rainure.

8. Système de transmission selon la revendication 7, **caractérisé en ce que** les languettes et les rainures s'étendent parallèlement à la direction axiale (18) des roues planétaires (10).

9. Système de transmission selon la revendication 6, **caractérisé en ce que** l'agencement de déplacement présente une partie de manipulation (25) qui entoure la came (26) ou la surface à cames, la partie de manipulation (25) étant guidée en rotation par rapport à la roue à denture intérieure (15).

10. Système de transmission selon la revendication 9, **caractérisé en ce que** ladite au moins une came (26) est associée à la partie de manipulation (25).

11. Système de transmission selon la revendication 9, **caractérisé en ce que** la partie de manipulation (25) est susceptible d'être verrouillée dans les positions d'engrènement respectives de la roue à denture intérieure.
